# EUROPÄISCHE PATENTSCHRIFT

(11) **EP 2 012 589 B1**
(45) Veröffentlichungstag und Bekanntmachung des Hinweises auf die Patenterteilung: **07.10.2009**
(21) Anmeldenummer: 07720108.5
(22) Anmeldetag: 02.05.2007
(51) Int. Cl.: A01N 59/16, A01P 15/00

(54) **VERFAHREN ZUR BEKÄMPFUNG VON ERWINIA AMYLOVORA**
METHOD FOR CONTROLLING ERWINIA AMYLOVORA
PROCÉDÉ POUR LUTTER CONTRE ERWINIA AMYLOVORA

(30) Priorität: 02.05.2006 CH 719062006
(43) Veröffentlichungstag der Anmeldung: 14.01.2009
(73) Patentinhaber: Nanosys GMBH, 9427 Wolfhalden (CH)
(72) Erfinder: KOCH, Walter, CH-9427 Wolfhalden (CH)
(74) Vertreter: Schmauder & Partner AG Patent- & Markenanwälte VSP
(86) Internationale Anmeldenummer: PCT/CH2007/000211
(87) Internationale Veröffentlichungsnummer: WO 2007/124612

(56) Entgegenhaltungen:
- EP-A- 0 712 807
- WO-A-03/080231
- WO-A-20/05079569
- US-B1- 6 660 058
- THALMAYR M: "Wasseraufbereitung einmal anders, Mit der Kraft des Urwassers" INTERNET CITATION, [Online] XP002329702 Gefunden im Internet: URL:http://www.kma-online.de> [gefunden am 2000-02-01]

## Beschreibung

### Technisches Gebiet

Die vorliegende Erfindung betrifft ein Verfahren zur Bekämpfung von *Erwinia Amylovora* auf Pflanzen sowie eine Verwendung von nanoskaligem Silber.

### Stand der Technik

Das Bakterium *Erwinia Amylovora* ruft die als Feuerbrand bekannte Krankheit hervor, welche u.a. Kernobstbäume befällt und weltweit grossen landwirtschaftfichen Schaden anrichtet. *Erwinia Amylovora* kann bis heute nur mit dem Antibiotikum Streptomycinsulfat erfolgreich bekämpft werden. Dieses Antibiotikum besitzt jedoch den Nachteil, dass es durch die Bienen, welche die Blüten besuchen, in die Honigwaben getragen wird und somit in die menschliche Nahrungskette gelangt. Dies ist in höchstem Masse unerwünscht und kann auf den Menschen bis anhin noch nicht bekannte negative Auswirkungen haben. In der Schweiz ist die Anwendung von Streptomycinsulfat zur Bekämpfung des Feuerbrandes verboten, in anderen Ländern wie zum Beispiel in Deutschland und in Österreich nur mit strengen Auflagen im Ausnahmefall zugelassen. Es bleibt sonst den Obstbauern, deren Bäume und Plantagen vom Feuerbrand betroffen sind, lediglich die Rodung des befallenen Baumbestandes. In der Schweiz wurden im Jahre 2005 rund 6000 Kernobsthochstammbäume gerodet, wobei es zum Teil sogar zu amtlich verordneten Zwangsrodungen kam.

### Darstellung der Erfindung

Aufgabe der vorliegenden Erfindung war es, ein verbessertes Verfahren zur Bekämpfung von *Erwinia Amylovora* auf Pflanzen zu finden, das insbesondere nicht die obigen Nachteile aufweist.

Erfindungsgemäss wird diese Aufgabe durch das im Anspruch 1 definierte Verfahren gelöst.

Überraschend wurde festgestellt, dass durch Aufsprühen einer wässrigen Lösung von nanoskaligem Silber auf die Blüten und das Blattwerk der Pflanzen und/oder durch Injektion dieser Lösung in das Kambium der Pflanzen das Bakterium *Erwinia Amylovora* bekämpft bzw. dessen Vermehrung in sehr hohem Masse eingeschränkt wird, ohne dass giftige Silbersalze in die menschliche Nahrungskette gelangen.

Die bakterizide Wirkung von Silber in ionischer Form war an sich schon seit langem bekannt. Durch das Besprühen der Blüten und des Blattwerkes von Kernobstbäumen mit einer wasserlöslichen Silberverbindung, wie beispielsweise einer Silbernitrat-Lösung, könnten zwar bakterizid wirkende Silberionen bereitgestellt werden, die möglicherweise auch gegen *Erwinia Amylovora* wirken würden. Die Silberionen würden jedoch durch einen Regenguss in den Boden gespült und könnten, falls das Extrakt in ein Gewässer gelangen würde, zu einer Fischvergiftung führen, da wasserlösliche Silbersalze bekanntlich eine hohe Fischtoxizität aufweisen.

Aus der US 2002-0051824 A1 war zwar seit 1998 bekannt, dass Schichten von nanokristallinem Silber, die aus der Plasma-Vakuumphase abgeschieden werden, eine bakterizide Wirkung haben. Die Erkenntnis der bakteriziden Wirkung von nanokristallinem Silber konnte jedoch nicht auf die Bekämpfung von *Erwinia Amylovora* übertragen werden, da eine Pflanze wie zum Beispiel ein Kernobstbaum nicht im Plasma-Vakuumverfahren mit nanokristallinem Silber beschichtet werden kann.

In überraschender Weise stellte sich nun aber heraus, dass nanoskaliges Silber in wässriger Lösung gegenüber dem Bakterium *Erwinia Amylovora* eine mindest so hohe bakterizide Wirkung aufweist wie Silberionen. Da nanoskaliges Silber sehr oberflächenaktiv ist, setzt es sich auf praktisch jeder Oberfläche wie den Blättern, Blütenblatt und dem Stempel fest und bleibt daran haften. Wegen seiner nur geringen Wasserlöslichkeit gibt das auf der Oberfläche haftende nanoskalige Silber beim Kontakt mit einem wässrigen Medium (z.B. Bakterienschleim, Tau) nur gerade so viele Silberionen frei, wie zur Bekämpfung von Bakterien notwendig sind. Das auf der Oberfläche fest haftende nanoskalige Silber wird durch Regen nicht abgewaschen, so dass es nicht in das Grundwasser gelangt und deshalb und weil es ohnehin nicht in ionischer Form vorliegt auch keine akute, toxische Wirkung auf Fische ausübt. Ausserdem wird es von den Bienen nicht in die Honigwaben getragen.

Demnach bestand ein weiterer Aspekt der Erfindung darin, eine neue und vorteilhafte Verwendung von nanoskaligem Silber anzugeben.

Die WO 2006/049379 A1 beschreibt zwar eine nanopartikuläre Zusammensetzung zur Bekämpfung pathogener Mikroorganismen in Pflanzen. Allerdings handelt es sich dabei um eine sehr aufwändig herzustellende Silber-Silikat-Verbindung, die zudem insbesondere für gram-positive Bakterien geeignet ist.

Die WO 2006/079569 A1 beschreibt eine Zusammensetzung und ein Verfahren zum Haltbarmachen bzw. Konservieren von Schnittblumen und zur Verhinderung der Bildung eines Biofilms, der die Pflanzen befallen könnte. Darüber hinaus muss dabei zunächst nanokristallines Silber aus der Plasma-Vakuumphase abgeschieden und in eine wässrige Lösung eingetragen werden.

Auch die Druckschriften WO 2006/026026 A1, US 6,660,058 B1 und US 2003/0185889 A1 beschreiben zwar bakterizid wirkende Zusammensetzungen auf der Basis von Silber-Nanopartikeln. Eine Verwendung zur Bekämpfung von *Erwinia Amylovora* ist daraus jedoch nicht entnehmbar.

Die US 2003/0004065 A1 bezieht sich auf die Verwendung elektrolytisch hergestellter Silberionen und verneint sogar eine bakterizide Wirkung des metallischen Silbers und damit auch des nanoskaligen metallischen Silbers.

Vorteilhafte Ausführungsformen sind in den abhängigen Ansprüchen definiert. Im vorliegenden Zusammenhang ist unter nanoskaligem Silber eine kolloidale Form von Silber zu verstehen, welche mehrheitlich aus Silberpartikeln mit einer Teilchengrösse von höchstens 100 nm in zumindest einer Dimension besteht. Besonders bevorzugt ist eine Teilchengrösse von 5 bis 50 nm. Die Konzentration des nanoskaligen Silbers in der wässrigen Lösung liegt vorteilhafterweise im Bereich von 0,01 bis 50 ppm, vorzugsweise von 1 bis 10 ppm.

Das nanoskalige Silber wird bevorzugt durch nasschemische Reduktion von Silbersalzen hergestellt. Dabei wird die nasschemische Reduktion bevorzugt in einer Silbersalzlösung mit einer Konzentration von 0,01 bis 10% Silber, vorzugsweise 2 bis 8%, berechnet als Metall, durchgeführt. Ausserdem wird die nasschemische Reduktion bevorzugt in einem vorzugsweise mit Ammoniak, Carbonaten, Bicarbonaten, Calcium-, Kalium- oder Natriumhydroxid eingestellten alkalischen Milieu durchgeführt. Des Weiteren wird die nasschemische Reduktion vorzugsweise unter Verwendung eines aus der Gruppe bestehend aus Zucker, Melasse, Galactose, Fructose, Traubenzucker, Saccharose, Ameisensäure, Salicylsäure, Formaldehyd, Pyrogallol, Brenzkatechin, Gallussäure, Tannin, Zitronensäure, Citraten, Apfelsäure, Weinsäure, Tartraten, Ascorbinsäure, Alkalihydriden, Wasserstoff und Hydrochinon ausgewählten Reduktionsmittels oder einer Kombination davon durchgeführt. Die nasschemische Reduktion wird bevorzugt bei einer Temperatur von 1 °C bis 90°C, und besonders bevorzugt bei 40°C bis 75°C, durchgeführt.

Die wässrige Lösung wird bevorzugt aus vitalisiertem Wasser, nach einem handelsüblichen Verfahren gebildet, vorzugsweise nach dem Grander Verfahren.

Das Verfahren der Wasserbelebung nach Grander ist eine Technologie der Informationsübertragung, das heisst der Übertragung von Informationen höchster Ordnung. Die Wasserbelebung erfolgt unter anderem durch Geräte, die mit Informationswasser befüllt sind und die entweder in die Wasserleitung eingebaut oder direkt in das Wasser getaucht werden.

Nach Johann Grander besitzt das vitalisierte Wassers zahlreiche günstige Eigenschaften, die sich auf Menschen, Tiere, Pflanzen und die gesamte Umwelt übertragen lassen.

Die Konzentration des nanoskaligen Silbers ist vorzugsweise biodynamisch ausgemessen und liegt dabei vorzugsweise bei der Anwendung bei Pflanzen im Bereich von 0,1 bis 50 ppm und besonders bevorzugt von 0,6 bis 10 ppm.

Gemäss einer vorteilhaften Ausführungsform enthält die wässrige Lösung von nanoskaligem Silber zusätzlich nanoskaliges Gold.

### Wege zur Ausführung der Erfindung

Nanoskaliges Silber entfaltet gegen das Bakterium *Erwinia Amylovora* eine bakterizide Wirkung, die ähnlich ist wie diejenige von Streptomycinsulfat.

Bei der erfindungsgemässen Verwendung der wässrigen Lösung von nanoskaligem Silber werden pro Anwendungstag und Baum durchschnittlich 50 bis 250 mg Silber eingesetzt. Im Vergleich dazu nimmt der Mensch durch seine tägliche Nahrung ca. 0,02 bis 0,1 mg Silber/Tag auf. Weizenmehl enthält zirka 0,7 mg Silber/kg, Pilze 5 mg Silber/ kg und Muscheln sogar bis zu 10 mg Silber/kg.

### Ausführunosbeispieie

### Beispiel 1

In einem Becherglas werden 800 ml doppelt destilliertes, vitalisiertes Wasser und 320 mg Silbersulfat zum Kochen gebracht. Unter Rühren werden 20 Gramm Polivinylalkoho.l darin gelöst. Unter kräftigem Rühren wird während 4 Stunden bei einer Temperatur von 85 °C Wasserstoff über eine Glasfritte eingeblasen. Die Mischung wird sodann unter mässigem Rühren auf Raumtemperatur abgekühlt und die Lösung auf 1000 ml mit doppelt destilliertem Wasser verdünnt. Es hat sich braun-gelbes Nanosilber mit einer Silberkonzentration von ca. 220 ppm gebildet. Diese Nanosilberlösung lässt sich, mit der 20-fachen Menge Wasser verdünnt, in einem Zerstäuber auf Pflanzen applizieren.

### Beispiel 2

ln einem Becherglas werden 600 ml einer 10⁻² molaren Natriumborhydridlösung auf 1 °C abgekühlt und unter Rühren 100 ml einer 1%-igen Polivinylalkohollösung zugefügt. Unter sehr starkem Rühren werden sodann dieser kalten Mischung tropfenweise 200 ml einer 1%-igen Silbernitratlösung zugegeben. Diese Mischung wird unter mässigem Rühren bis kurz vor den Kochpunkt erhitzt und während 2 Stunden bei dieser Temperatur belassen. Nach dem Abkühlen auf Raumtemperatur wird mit destilliertem Wasser auf 1000 ml ergänzt und mit einem Vitalisierungsgerät nach Grander belebt. Es hat sich braun-schwarzes Nanosilber gebildet mit einer Konzentration von 1200 ppm. Diese Nanosilberlösung lässt sich mit der 200-fachen Menge an Wasser verdünnen und mit einer Pumpsprühflasche auf Pflanzen applizieren.

### Beispiel 3

In einem Becherglas werden 200 mg Silbernitrat in 800 ml destilliertem Wasser gelöst. Diese Lösung wird auf 80 °C erhitzt, und unter starkem Rühren werden tropfenweise 100 ml einer 0,2%-igen Natriumcitratlösung zugefügt. Es entsteht eine gelbbraune Nanosilberlösung. Nach dem Erkalten wird die Lösung mit destilliertem Wasser auf 1000 ml ergänzt. Die Lösung enthält 125 ppm nanoskaliges Silber.

### Beispiel 4

In einem Becherglas werden 500 ml einer 2%-igen Hydrochinonlösung'in destilliertem Wasser kräftig gerührt und 2 Gramm Natriumcitrat zugefügt. Nach Vorliegen einer klaren Lösung werden unter heftigstem Rühren 500 ml einer 8%-igen Silbernitratlösung zugeschüttet. Unter weiterem mässigem Rühren wird die Lösung auf 60 °C erhitzt und eine Stunde bei 60 °C gehalten und sodann wieder auf Raumtemperatur abgekühlt und mit destilliertem auf 1000 ml aufgefüllt. Das entstandene Nanosilber ist von dunkelbrauner Farbe und zeigt beim Verdünnen mit vitalisiertem Wasser auf einen Silbergehalt von 5-10 ppm die für Nanosilber typische Plasmonenresonanz.

### Beispiel 5

In einem Becherglas werden 10,6 Gramm Silbercarbonat mit 70 ml Wasser und 1 Gramm Pyrogallol kräftig gerührt und 18 ml einer 10%-igen Lösung von Ammoniak 24%-ig in Wasser beigefügt. Das Gemisch wird unter mässigem Rühren innert einer Stunde auf 50°C erhitzt und sodann unter weiterem mässigen Rühren auf Raumtemperatur abgekühlt. Das Gemisch enthält 83'000 ppm Nanosilber und ist von schwarzbrauner Farbe. 7,2 Gramm dieser Mischung werden unter Rühren 100 Liter demineralisiertem Wasser zugefügt und einer Bioresonanz-Messung unterworfen. Zur Bestimmung der Bioresonanz kam ein handelsübliches Rayocomp PS 1000 polar der Firma Rayonex, D-57356 Lennestadt zur Anwendung. Bestimmt wurde die Resonanz mit einem Biotensor mit den Interferenzen 7,5, 7,83, 8,50, 9,5 und 10,00. Die Testperson verspürte keine Interaktion bei den fünf einzelnen Interferenzfrequenzen. Im Messmodus aller fünf vorgenannten Interferenzen gleichzeitig war ebenfalls keine Reaktion spürbar.

### Beispiel 6

In einem Becherglas werden 11,0 Gramm Silberoxid mit 77 ml Wasser und 1 Gramm Tannin sowie 1 Gramm Natriumcarbonat kräftig gerührt und mit 11 ml einer 10%-igen Lösung von Ammoniak 24%-ig in Wasser versetzt. Das Gemisch wird unter mässigem Rühren innert einer halben Stunde auf 50°C erhitzt und sodann unter weiterem Rühren auf Raumtemperatur abgekühlt. Das Gemisch enthält 102'000 ppm Nanosilber und ist von schwarzbrauner Farbe. 6,0 Gramm dieser Mischung werden unter Rühren 90 Liter demineralisiertem, mit einem handelsüblichen UVO-Wasserbelebungsgerät nach Grander der Firma U.V.O-Vertriebs GmbH, A-6100 Seefeld, vitalisiertem Wasser zugefügt. Die so erhaltene Mischung (Wirklösung 6) wurde einer Bioresonanz-Messung unterworfen. Zur Bestimmung der Bioresonanz kam abermals ein handelsübliches Rayocomp PS 1000 polar der Firma Rayonex, D-57356 Lennestadt zur Anwendung. Bestimmt wurde die Resonanz mit einem Biotensor mit den Interferenzen 7,5, 7,83, 8,50, 9,5 und 10,00. Die Testperson verspürte eine heftige Interaktion bei allen 5 gemessenen Interferenzfrequenzen. Im Messmodus mit allen fünf vorgenannten Interferenzen gleichzeitig war die Reaktion ebenso heftig.

### Beispiel 7

In einem Becherglas werden 0,068 Gramm Goldtetrachlorid in 33,9 ml Wasser gelöst und als 0,2%-ige Goldsalzlösung einem Becherglas mit 340 ml demineralisiertem Wasser zugefügt. Das Gemisch wird auf 75 °C erhitzt und bei einer Umrührgeschwindigkeit von 750 Touren/Minute werden 5 Gramm 1 %-ige, wässrige Tanninlösung zugegeben. Es wird 15 Minuten bei 500 Umdrehungen pro Minute weitergerührt und 5 Gramm einer 5%-igen wässrigen Natriumcarbonatlösung zugegeben. Das Gemisch wird unter mässigem Rühren auf Raumtemperatur abgekühlt. Das Gemisch enthält 90 ppm Nanogold und ist von dunkel-roter Farbe. 11,2 Gramm dieser Mischung werden unter Rühren 1 Liter der fertigen Mischung aus Beispiel 6 zugefügt und durch ein handelsüblichen UVO-Wasserbelebungsgerät nach Grander der Firma U.V.O-Vertriebs GmbH, A-6100 Seefeld gegossen. Diese goldhaltige Nanosilberlösung (Wirklösung 7) wurde einer Bioresonanz-Messung unterworfen. Zur Bestimmung der Bioresonanz kam wiederum ein handelsübliches Rayocomp PS 1000 polar der Firma Rayonex, D-57356 Lennestadt zur Anwendung. Bestimmt wurde die Resonanz mit einem Biotensor mit den Interferenzen 7,5, 7,83, 8,50, 9,5 und 10,00 . Die Testperson verspürte eine sehr deutliche Interaktion bei den fünf einzelnen Interferenzfrequenzen. Im Messmodus mit allen fünf vorgenannten Interferenzen gleichzeitig war die Reaktion extrem deutlich ausgeprägt.

In Wirkungstests gegen *Erwinia Amylovora* im Suspensionsversuch wurden folgende Ergebnisse erzielt:

### Wirklösung 6 aus Beispiel 6

| | Einwirkzeit -> | 1 Min. | 5 Min. | 30 Min. | 60 Min. |
|---|---|---|---|---|---|
| | | | | | |
| A | NL+ Bakterien, ohne Produkt | + | + | + | + |
| B | 1 00%-ige Wirklösung 6 | - | - | - | - |
| C | 50%-ige Wirklösung 6 | - | - | - | - |
| D | 25%-ige Wirklösung 6 | - | - | - | - |
| E | 1 0%-ige Wirklösung 6 | - | - | - | - |
| F | 5%-ige Wirklösung 6 | + | + | - | - |
| G | 2,5%-ige Wirklösung 6 | + | + | + | + |
| H | NL ohne Bakterien | - | - | - | - |

| | | | | | |
|---|---|---|---|---|---|
| NL=Nährlösung, + =Wachstum E. amylovora - =kein Wachstum E. amylovora | | | | | |

Im Suspensionsversuch wirkte die Wirklösung aus Beispiel 6 bis zu einer Konzentration der Wirklösung von 10% bei einer Einwirkungszeit von 1 Minute und länger vollständig gegen *Erwinia Amylovora.* Bei 5%-iger Anwendung wirkte die Wirklösung aus Beispiel 6 ab einer Einwirkzeit von 30 Minuten. Bei 2,5%-iger Anwendung wirkte die Wirklösung 6 nicht mehr.

Frisch hergestellte Nanosilberlösung gemäss Beispiel 6 wurde 10-fach mit normalem Leitungswasser verdünnt. Dieses als Wirklösung 6 conc. bezeichnetes Produkt zeigte im Suspensionsversuch folgende Wirkung gegen *Erwinia Amylovora:*

| | Einwirkzeit -> | 1 Min. | 5 Min. | 30 Min. | 60 Min. |
|---|---|---|---|---|---|
| | | | | | |
| A | NL+ Bakterien, ohne Produkt | + | + | + | + |
| B | 5%-Wirklösung 6 conc. | - | - | - | - |
| C | 1 %-Wirklösung 6 conc. | - | - | - | - |
| D | 0,5%-Wirklösung 6 conc. | - | - | - | - |
| E | 0,1 %-Wirklösung 6 conc. | - | - | - | - |
| F | 0,05%-Wirklösung 6 conc. | + | + | + | + |
| G | 0,01 %-Wirklösung 6 conc. | + | + | + | + |
| H | NL ohne Bakterien | - | - | - | - |

| | | | | | |
|---|---|---|---|---|---|
| NL=Nährlösung, + =Wachstum E. amylovora - =kein Wachstum E. amylovora | | | | | |

Im Suspensionsversuch wirkte die Wirklösung 6 conc. bis zu einer Konzentration des Produktes von 0,1 % bei einer Einwirkungszeit von 1 Minute und länger vollständig gegen *Erwinia Amylovora.* Bei 0,05%-iger Anwendung wirkte es nicht mehr. Im Vergleich zur Wirklösung 6 war der Abtötungseffekt also 10-mal schwächer.

### Freilandversuch an einer Quitte (cydonia oblonga)

Die nicht von *Erwinia Amylovora* befallene Quitte wurde mit Wirklösung 7 behandelt durch eine einmalige Injektion der Wirklösung 7 mittels einer Injektionsnadel ins Kambium dem ganzen Stammumfang entlang alle 3 Zentimeter ca. 1 ml. Zusätzlich erfolgte Anfang Mai 2005 am Morgen des ersten Befalltages, berechnet nach dem Maryblyt-Prognosemodell, eine baumumfassende. Ausspritzung der Wirklösung 7. Bis zum 30. April 2007 konnte an der Quitte kein Befall mit *Erwinia Amylovora* beobachtet werden.

## Patentansprüche

1. Verfahren zur Bekämpfung von *Erwinia Amylovora* auf Pflanzen, **dadurch gekennzeichnet, dass** eine wässrige Lösung von nanoskaligem Silber auf das Blüten- und Blattwerk der Pflanze aufgesprüht und/oder ins Kambium injiziert wird.

2. Verfahren nach Anspruch 1, wobei das nanoskalige Silber eine Teilchengrösse von 5 bis 50 nm aufweist.

3. Verfahren nach Anspruch 1 oder 2, wobei die Konzentration des nanoskaligen Silbers in der wässrigen Lösung im Bereich von 0,01 bis 50 ppm, vorzugsweise von 0,6 bis 10 ppm liegt.

4. Verfahren nach einem der Ansprüche 1 bis 3, wobei das nanoskalige Silber durch nasschemische Reduktion von Silbersalzen hergestellt wird.

5. Verfahren nach Anspruch 4, wobei die nasschemische Reduktion in einer Silbersalzlösung mit einer Konzentration von 0,1 bis 10% Silber, vorzugsweise 2 bis 8%, berechnet als Metall durchgeführt wird.

6. Verfahren nach Anspruch 4 oder 5, wobei die nasschemische Reduktion in einem vorzugsweise mit Ammoniak, Carbonaten, Bicarbonaten, Calcium-, Kalium- oder Natriumhydroxid eingestellten alkalischen Milieu durchgeführt wird.

7. Verfahren nach einem der Ansprüche 4 bis 6, wobei die nasschemische Reduktion unter Verwendung eines aus der Gruppe bestehend aus Zucker, Melasse, Galactose, Fructose, Traubenzucker, Saccharose, Ameisensäure, Salicylsäure, Formaldehyd, Pyrogallol, Brenzkatechin, Gallusssäure, Tannin, Zitronensäure, Citraten, Apfelsäure, Weinsäure, Tartraten, Ascorbinsäure, Alkalihydride, Wasserstoff und Hydrochinon ausgewählten Reduktionsmittels oder einer Kombination davon durchgeführt wird.

8. Verfahren nach einem der Ansprüche 4 bis 7, wobei die nasschemische Reduktion bei einer Temperatur von 1°C bis 95°C, vorzugsweise 40°C bis 75°C, durchgeführt wird.

9. Verfahren nach einem der Ansprüche 1 bis 8, wobei die wässrige Lösung aus vitalisiertem, vorzugsweise nach dem Grander Verfahren hergestelltem Wasser, gebildet wird.

10. Verfahren nach einem der Ansprüche 1 bis 9, wobei die Konzentration des nanoskaligen Silbers im Bereich von 0,1 bis 50 ppm, vorzugsweise von 0,6 bis 10 ppm, liegt und biodynamisch ausgemessen ist.

11. Verfahren nach einem der Ansprüche 1 bis 10, wobei die wässrige Lösung zusätzlich nanoskaliges Gold enthält.

12. Verwendung von nanoskaligem Silber zur Bekämpfung von *Erwinia Amylovora.*

## Claims

1. A method for controlling *Erwinia amylovora* on plants, **characterized in that** an aqueous solution of nanoscale silver is sprayed onto the flowers and foliage of the plant and/or is injected into the cambium.

2. The method according to claim 1, wherein the nanoscale silver has a particle size of 5 to 50 nm.

3. The method according to claim 1 or 2, wherein the concentration of the nanoscale silver in the aqueous solution is in the range of 0.01 to 50 ppm, preferably of 0.6 to 10 ppm.

4. The method according to one of claims 1 to 3, wherein the nanoscale silver is prepared by wet chemical reduction of silver salts.

5. The method according to claim 4, wherein the wet chemical reduction is carried out in a solution of silver salts having a concentration of 0.1 to 10% silver, preferably 2 to 8%, expressed in terms of the metal.

6. The method according to claim 4 or 5, wherein the wet chemical reduction is carried out in an alkaline environment that is adjusted preferably with ammonia, carbonates or bicarbonates or with calcium, potassium or sodium hydroxide.

7. The method according to one of claims 4 to 6, wherein the wet chemical reduction is carried out by using a reducing agent selected from the group consisting of sugar, molasses, galactose, fructose, glucose, saccharose, formic acid, salicylic acid, formaldehyde, pyrogallol, pyrocatechol, gallic acid, tannin, citric acid, citrates, malic acid, tartaric acid, tartrates, ascorbic acid, alkali hydrides, hydrogen, hydroquinone or a combination thereof.

8. The method according to one of claims 4 to 7, wherein the wet chemical reduction is carried out at a temperature of 1°C to 95°C, preferably 40°C to 75°C.

9. The method according to one of claims 1 to 8, wherein the aqueous solution is formed of vitalized water that is preferably produced according to the Grander method.

10. The method according to one of claims 1 to 9, wherein the concentration of the nanoscale silver is in the range of 0.1 to 50 ppm, preferably of 0.6 to 10 ppm, and is measured biodynamically.

11. The method according to one of claims 1 to 10, wherein the aqueous solution further contains nanoscale gold.

12. Use of nanoscale silver for controlling *Erwinia amylovora.*

## Revendications

1. Procédé pour lutter contre *Erwinia amylovora* chez les plantes, **caractérisé en ce qu'**une solution aqueuse contenant de l'argent à l'échelle nanométrique est répendue par vaporisation sur les fleurs et le feuillage de la plante et/ou injectée dans le cambium.

2. Procédé selon la revendication 1, dans lequel l'argent à l'échelle nanométrique a une taille de particules comprise entre 5 et 50 nm.

3. Procédé selon les revendications 1 et 2, dans lequel la concentration d'argent à l'échelle nanométrique dans la solution aqueuse est comprise entre 0.01 et 50 ppm, de préférence entre 0.6 et 10 ppm.

4. Procédé selon les revendications 1 à 3, dans lequel l'argent à l'échelle nanométrique est produit par réduction chimique par voie sèche de sels d'argent.

5. Procédé selon la revendication 4, dans lequel la réduction chimique par voie sèche est effectuée dans une solution de sels d'argent ayant une concentration d'argent, exprimée en termes de métal, comprise entre 0.1 et 10%, de préférence entre 2 et 8%.

6. Procédé selon la revendication 4 ou la revendication 5, dans lequel la réduction chimique par voie sèche est effectuée en milieu alcalin ajusté de préférence avec de l'ammoniac, des carbonates ou des bicarbonates ou avec du calcium, du potassium ou de l'hydroxyde de sodium.

7. Procédé selon l'une des revendications 4 à 6, dans lequel la réduction chimique par voie sèche est effectuée en utilisant un agent réducteur choisi parmi le groupe constitué par le sucre, la mélasse, le galactose, le fructose, le sucre de raisin, le saccharose, l'acide formique, l'acide salicylique, le formaldéhyde, le pyrogallol, le pyrocatéchol, l'acide gallique, les tanins, l'acide citrique, les citrates, l'acide malique, l'acide tartrique, les tartrates, l'acide ascorbique, les hydrures alcalins, l'hydrogène, l'hydroquinone ou un mélange de ceux-ci.

8. Procédé selon l'une des revendications 4 à 7, dans lequel la réduction chimique par voie sèche est effectuée à une température comprise entre 1°C et 95°C, de préférence entre 40°C et 75°C.

9. Procédé selon l'une des revendications 1 à 8, dans lequel la solution aqueuse est formée d'eau vitalisée, de préférence produite selon la méthode de Grander.

10. Procédé selon l'une des revendications 1 à 9, dans lequel la concentration d'argent à l'échelle nanométrique est comprise entre 0.1 et 50 ppm, de préférence entre 0.6 et 10 ppm, et est mesurée biodynamiquement.

11. Procédé selon l'une des revendications 1 à 10, dans lequel la solution aqueuse contient, additionellement, de l'or à l'échelle nanométrique.

12. Utilisation de l'argent à l'échelle nanométrique pour lutter contre *Erwinia amylovora.*
